(19) Europäisches Patentamt
European Patent Office
Office européen des brevets

(11) EP 2 518 104 B1

(12) # EUROPEAN PATENT SPECIFICATION

(45) Date of publication and mention of the grant of the patent:
**08.01.2014 Bulletin 2014/02**

(51) Int Cl.:
***C08K 3/36*** *(2006.01)* ***C08K 5/16*** *(2006.01)*
***C08L 21/00*** *(2006.01)* ***C08C 19/00*** *(2006.01)*

(21) Application number: **12165932.0**

(22) Date of filing: **27.04.2012**

(54) **Tire rubber composition and pneumatic tire**

Kautschukzusammensetzung und Luftreifen

Composition de caoutchouc et pneumatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2011 JP 2011100084**

(43) Date of publication of application:
**31.10.2012 Bulletin 2012/44**

(73) Proprietor: **SUMITOMO RUBBER INDUSTRIES LIMITED**
**Kobe-shi,**
**Hyogo-ken (JP)**

(72) Inventor: **Uesaka, Kenichi**
**Kobe-shi, Hyogo, 651-0072 (JP)**

(74) Representative: **Manitz, Finsterwald & Partner GbR**
**Martin-Greif-Strasse 1**
**80336 München (DE)**

(56) References cited:
**EP-A1- 2 098 564** **EP-A1- 2 345 696**
**WO-A1-01/88027**

EP 2 518 104 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a tire rubber composition and a pneumatic tire produced using the rubber composition.

### BACKGROUND ART

Conventionally, fuel economy of automobiles has been improved by reducing the rolling resistance of tires (i.e. by improving the performance in terms of rolling resistance). Still, in recent years, there has been an increasingly growing demand for a reduction in fuel consumption of automobiles. With this demand has come a demand for a rubber composition with very little heat build-up (good fuel economy) which is for use in producing a tread, which occupies a larger portion of a tire among various tire components.

Known as the method for producing a satisfactory rubber composition with less heat build-up is a method of reducing the amount of reinforcing filler in the rubber composition. In this case, however, the hardness of the rubber composition is decreased, and thereby tires produced therefrom are softer. Such tires disadvantageously impair handling performance (handling stability) of automobiles and exhibit low wet grip performance and abrasion resistance.

Patent Document 1 teaches that use of a modified styrene-butadiene rubber, which is modified with a specific organic silicon compound containing an alkoxy group, enables improvement in fuel economy, wet grip performance, and abrasion resistance. However, in order to achieve satisfactory levels of all of these performances, there remains a need for further studies. The processability of the rubber composition should also be improved. The modified styrene-butadiene rubber used has only one modified end, and modification of both or two or more ends is not examined.

EP 2 098 564 A1 discloses a cross-linkable rubber composition including i) 80 to 100 phr of functionalized styrene butadiene rubber and/or high vinyl-butadiene rubber, ii) 0 to 20 phr of a further polar or unpolar rubber, iii) at least one polar filler and iv) at least 0.1 phr amino fatty acids, fatty acid amides, amino acid derivatives and/or compounds derived from amino acids and fatty acids.

A similar composition is known from EP 2 345 696 A1.

WO 01/88027 A1 relates to a rubber composition including silica and a compound according to the formula (1) as specified in the appended claim 1.

Patent Document 1: JP-A 2001-114938

### SUMMARY OF THE INVENTION

The present invention aims to solve the above problems, and an object of the present invention is to provide a tire rubber composition that enables improvement in fuel economy, wet grip performance, and abrasion resistance while maintaining good processability. A further object of the present invention is to provide a pneumatic tire produced using the tire rubber composition.

The present invention relates to a tire rubber composition comprising: a rubber component including a diene polymer; silica; and a compound represented by the following formula (I), the diene polymer being a modified diene polymer obtained by reacting a compound (A) and a compound (B), the compound (A) being an active alkali metal-terminated conjugated diene polymer obtained by polymerizing a conjugated diene monomer alone or with an aromatic vinyl monomer, in the presence of a compound (C), the compound (B) being a modifying agent having a functional group, the compound (C) being a chemical species obtained by reacting an organic alkali metal compound with a compound represented by the following formula (2):

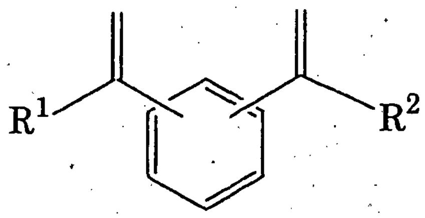 (2)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof,

the formula (I) being as follows:

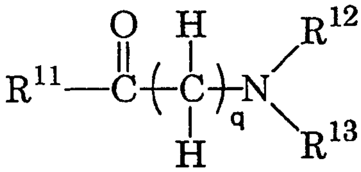

(I)

wherein $R^{11}$ represents a hydrogen atom, a branched or unbranched $C_{1-30}$ alkyl group, a branched or unbranched $C_{2-30}$ alkenyl group, a branched or unbranched $C_{6-30}$ aryl group, or a hydroxyl group; $R^{12}$ and $R^{13}$ are the same as or different from each other and each represent a hydrogen atom, a branched or unbranched $C_{1-30}$ alkyl group, a branched or unbranched $C_{2-30}$ alkenyl group, a branched or unbranched $C_{230}$ alkynyl group, a branched or unbranched $C_{6-30}$ aryl group, or a group represented by the following formula (II), wherein a hydrogen atom in the alkyl, alkenyl, alkynyl, or aryl group may be substituted with a hydroxyl or carboxyl group; a pair of $R^{11}$ and $R^{12}$, $R^{11}$ and $R^{13}$, or $R^{12}$ and $R^{13}$ may together form a ring structure; and q represents an integer of 0 to 8, and
the formula (II) being as follows:

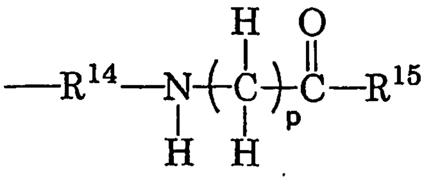

(II)

wherein $R^{14}$ represents a branched or unbranched $C_{1-30}$ alkylene group; $R^{15}$ represents a hydrogen atom, a branched or unbranched $C_{1-30}$ alkyl group, a branched or unbranched $C_{230}$ alkenyl group, a branched or unbranched $C_{6-30}$ aryl group, or a hydroxyl group; and p represents an integer of 0 to 10.

The above modifying agent is preferably a compound represented by the following formula (3):

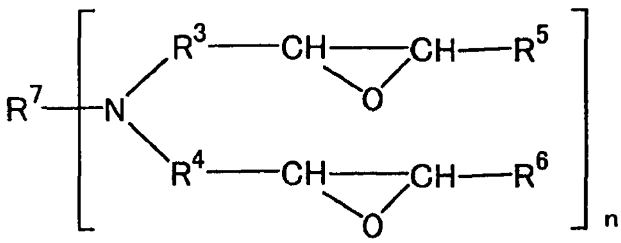

(3)

wherein $R^3$ and $R^4$ are the same as or different from each other and each represent a $C_{1-10}$ hydrocarbon group, and the hydrocarbon group may have at least one selected from the group consisting of an ether group and a tertiary amine group; $R^5$ and $R^6$ are the same as or different from each other and each represent a hydrogen atom or a $C_{1-20}$ hydrocarbon group, and the hydrocarbon group may have at least one selected from the group consisting of an ether group and a tertiary amine group; $R^7$ represents a $C_{1-20}$ hydrocarbon group, and the hydrocarbon group may have at least one selected from the group consisting of an ether group, a tertiary amine group, an epoxy group, a carbonyl group, and a halogen group; and n is an integer of 1 to 6.

Preferably, the same modifying agent is introduced into both ends of the active conjugated diene polymer.

The amount of the diene polymer is preferably not less than 5% by mass based on 100% by mass of the rubber component.

Preferably, the conjugated diene monomer is at least one of 1,3-butadiene and isoprene, and the aromatic vinyl monomer is styrene.

Preferably, the modified diene polymer is a modified styrene-butadiene rubber obtained by polymerizing 1,3-butadiene and styrene.

The silica preferably has a nitrogen adsorption specific surface area of 40 to 250 $m^2/g$.

The tire rubber composition is preferably for use as a rubber composition for a tread.

The present invention also relates to a pneumatic tire produced using the rubber composition.

Since the tire rubber composition according to the present invention contains a specific modified diene polymer, silica, and a compound represented by the formula (I), the tire rubber composition enables improvement in fuel economy,

wet grip performance, and abrasion resistance while maintaining good processability. By using the rubber composition in producing tire components such as a tread, a pneumatic tire excellent in the above performances is efficiently provided.

BEST MODE FOR CARRYING OUT THE INVENTION

The tire rubber composition of the present invention comprises: a rubber component including a diene polymer; silica; and a compound represented by the following formula (I), and the diene polymer is a modified diene polymer obtained by reacting a compound (A) and a compound (B), in which the compound (A) is an active alkali metal-terminated conjugated diene polymer obtained by polymerizing a conjugated diene monomer alone or with an aromatic vinyl monomer, in the presence of a compound (C), the compound (B) is a modifying agent having a functional group, and the compound (C) is a chemical species obtained by reacting an organic alkali metal compound with a compound represented by the following formula (2):

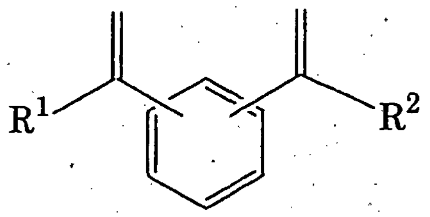

(2)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof.

The formula (I) is as follows:

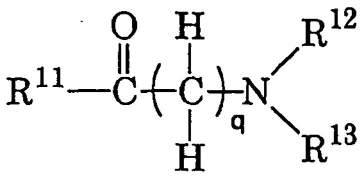

(I)

wherein $R^{11}$ represents a hydrogen atom, a branched or unbranched $C_{1-30}$ alkyl group, a branched or unbranched $C_{2-30}$ alkenyl group, a branched or unbranched $C_{6-30}$ aryl group, or a hydroxyl group; $R^{12}$ and $R^{13}$ are the same as or different from each other and each represent a hydrogen atom, a branched or unbranched $C_{1-30}$ alkyl group, a branched or unbranched $C_{2-30}$ alkenyl group, a branched or unbranched $C_{230}$ alkynyl group, a branched or unbranched $C_{6-30}$ aryl group, or a group represented by the following formula (II), wherein a hydrogen atom in the alkyl, alkenyl, alkynyl, or aryl group may be substituted with a hydroxyl or carboxyl group; a pair of $R^{11}$ and $R^{12}$, $R^{11}$ and $R^{13}$, or $R^{12}$ and $R^{13}$ may together form a ring structure; and q represents an integer of 0 to 8.

The formula (II) is as follows:

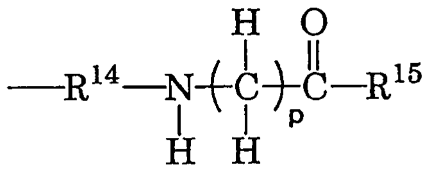

(II)

wherein $R^{14}$ represents a branched or unbranched $C_{1-30}$ alkylene group; $R^{15}$ represents a hydrogen atom, a branched or unbranched $C_{1-30}$ alkyl group, a branched or unbranched $C_{230}$ alkenyl group, a branched or unbranched $C_{6-30}$ aryl group, or a hydroxyl group; and p represents an integer of 0 to 10.

Since, in the present invention, the chemical species (C), which is obtained by reacting the compound represented by the formula (2) and an organic alkali metal compound, is used as a polymerization initiator in the polymerization reaction, both ends of the polymer chain (compound (A) (active conjugated diene polymer)) produced by the polymerization reaction are living polymer ends. Therefore, both ends of the active conjugated diene polymer (A) can be modified with the modifying agent (B). Compared to the case that only one end of the polymer is modified, the modified diene

polymer obtained by modifying both ends of the compound (A) with the compound (B) is excellent in the fuel economy, wet grip performance, and abrasion resistance, and these performances are improved in a balanced manner.

On the other hand, there can be one alternative method for introducing a functional group (modifying group) to both ends of the polymer. In this method, polymerization is carried out using a polymerization initiator having a functional group, and a modifying agent is reacted with a polymerizing end. In this case, the resulting polymer has the functional group derived from the polymerization initiator at one end and the functional group derived from the modifying agent at the other end. However, since the interaction between the functional group of a polymerization initiator and silica is generally weak, the balance of the fuel economy, wet grip performance and abrasion resistance is inferior. In addition, the functional group of a polymerization initiator is likely to be released, and thus contributes to an increase in energy loss, leading to poor fuel economy. Further, in the case of using a polymerization initiator having a functional group with high polarity, the functional group coordinates with a living polymer end and therefore affects the reaction between the polymerizing end and the modifying agent. In other words, in this case, a desired functional group cannot be introduced into the polymerizing end.

In contrast, since the compound (A) is one obtained using the compound (C) as a polymerization initiator, the polymer chain grows in two directions by the polymerization reaction, that is, has two living polymer ends so that functional groups of any modifying agent can be introduced into the ends. Therefore, addition of the modified diene polymer obtained by reacting the active conjugated diene polymer (A) and the modifying agent (B) provides a rubber composition excellent in the balance of the fuel economy, wet grip performance, and abrasion resistance.

Combination use of the modified diene polymer and silica significantly lowers the processability of the rubber composition. Here, use of a compound represented by the formula (I) together with the modified diene polymer and silica improves the processability and wet grip performance while maintaining good fuel economy and abrasion resistance which result from the addition of the modified diene polymer. Thus such use synergistically improves the fuel economy, wet grip performance, and abrasion resistance (especially, fuel economy and wet grip performance) while maintaining good processability.

In the present invention, the diene polymer is a modified diene polymer obtained by reacting compounds (A) and (B).

The compound (A) is an active alkali metal-terminated conjugated diene polymer obtained by polymerizing a conjugated diene monomer alone or with an aromatic vinyl monomer, in the presence of a compound (C). It should be noted that the active conjugated diene polymer is terminated at two ends with an alkali metal.

The compound (C) is a chemical species obtained by reacting an organic alkali metal compound with a compound represented by the following formula (2).

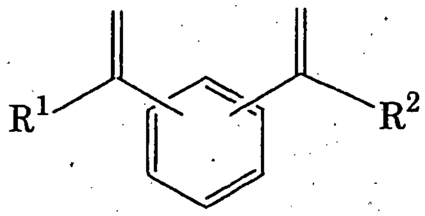

(2)

In the formula (2), $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group (-COOH), a mercapto group (-SH), or a derivative thereof.

Examples of branched or unbranched alkyl groups for $R^1$ and $R^2$ include $C_{1-30}$ alkyl groups (preferably $C_{1-8}$, more preferably $C_{1-4}$, and still more preferably $C_{1-2}$ alkyl groups) such as a methyl group, ethyl group, n-propyl group, isopropyl group, n-butyl group, iso-butyl group, sec-butyl group, tert-butyl group, pentyl group, hexyl group, heptyl group, 2-ethylhexyl group, octyl group, nonyl group, and decyl group. Other examples of the alkyl groups include alkyl groups whose hydrogen atom(s) is(are) substituted with aryl group(s) (e.g. phenyl group).

Examples of branched or unbranched aryl groups for $R^1$ and $R^2$ include $C_{6-18}$ aryl groups (preferably $C_{6-8}$ aryl groups) such as a phenyl group, tolyl group, xylyl group, naphthyl group, and biphenyl group. Other examples of the aryl groups include aryl groups whose hydrogen atom(s) is(are) substituted with alkyl group(s) (e.g. methyl group).

Examples of branched or unbranched alkoxy groups for $R^1$ and $R^2$ include $C_{1-8}$ alkoxy groups (preferably $C_{1-6}$, more preferably $C_{1-4}$ alkoxy groups) such as a methoxy group, ethoxy group, n-propoxy group, isopropoxy group, n-butoxy group, and t-butoxy group. Other examples of the alkoxy groups include cycloalkoxy groups (e.g. $C_{5-8}$ cycloalkoxy groups such as cyclohexyloxy group) and aryloxy groups (e.g. $C_{6-8}$ aryloxy groups such as phenoxy group and benzyloxy group).

Examples of branched or unbranched silyloxy groups for $R^1$ and $R^2$ include silyloxy groups substituted with a $C_{120}$ aliphatic or aromatic group (e.g. trimethylsilyloxy group, triethylsilyloxy group, triisopropylsilyloxy group, diethylisopropylsilyloxy group, t-butyldimethylsilyloxy group, t-butyldiphenylsilyloxy group, tribenzylsilyloxy group, triphenylsilyloxy group, tri-p-xylylsilyloxy group).

Examples of branched or unbranched acetal groups for $R^1$ and $R^2$ include groups represented by the formula: - C(RR')-OR" or the formula: -O-C(RR')-OR". Examples of groups represented by the former formula include a methoxymethyl group, ethoxymethyl group, propoxymethyl group, butoxymethyl group, isopropoxymethyl group, t-butoxymethyl group, and neopentyloxymethyl group. Examples of groups represented by the latter formula include a methoxymethoxy group, ethoxymethoxy group, propoxymethoxy group, i-propoxymethoxy group, n-butoxymethoxy group, t-butoxymethoxy group, n-pentyloxymethoxy group, n-hexyloxymethoxy group, cyclopenthyloxymethoxy group, and cyclohexyloxymethoxy group.

$R^1$ and $R^2$ each are preferably a hydrogen atom, a branched or unbranched alkyl group, or a branched or unbranched aryl group. With this structure, the balance of the fuel economy, wet grip performance and abrasion resistance can be improved. $R^1$ and $R^2$ are preferably the same because the polymer is allowed to grow equally in two directions.

With the structure of formula (2) the balance of the fuel economy, wet grip performance and abrasion resistance can be improved.

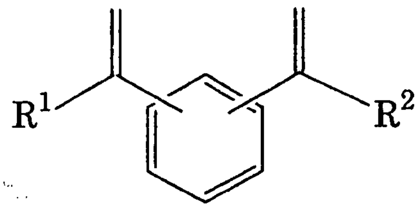

(2)

Specific examples of compounds represented by the formula (2) include 1,2-divinylbenzene, 1,3-divinylbenzene, 1,4-divinylbenzene, 1,2-diisopropenylbenzene, 1,3-diisopropenylbenzene, 1,4-diisopropenylbenzene, 1,2-diisobutenylbenzene, 1,3-diisobutenylbenzene, 1,4-diisobutenylbenzene, 1,3-phenylenebis(1-vinylbenzene), 1,4-phenylenebis(1-vinylbenzene), 1,1'-methylenebis(2-vinylbenzene), 1,1'-methylenebis(3-vinylbenzene), and 1,1'-methylenebis(4-vinylbenzene). Any of these may be used alone, or two or more of these may be used in combination. Among these, 1,3-divinylbenzene, 1,3-diisopropenylbenzene, and 1,3-phenylenebis(1-vinylbenzene) are preferred.

Examples of the organic alkali metal compound used in the present invention include hydrocarbon compounds containing an alkali metal such as lithium, sodium, potassium, rubidium, or cesium. Among these, lithium- or sodium-containing compounds having 2 to 20 carbon atoms are preferred. Specific examples thereof include ethyllithium, n-propyllithium, iso-propyllithium, n-butyllithium, sec-butyllithium, t-octyllithium, n-decyllithium, phenyllithium, 2-naphthyllithium, 2-butyl-phenyllithium, 4-phenyl-butyllithium, cyclohexyllithium, 4-cyclopentyllithium, and 1,4-dilithio-butene-2. Among these, n-butyllithium and sec-butyllithium are preferred because they allow the reaction to proceed rapidly to provide a polymer with a narrow molecular weight distribution.

The method for preparing the compound (C) is not particularly limited, provided that the compound represented by the formula (2) and the organic alkali metal compound are brought into contact. Specifically, the compound (C) can be prepared by dissolving each of the compound represented by the formula (2) and the organic alkali metal compound in a separate organic solvent, which is inert to the reaction, such as a hydrocarbon solvent; and adding dropwise the solution of the organic alkali metal compound to the solution of the compound represented by the formula (2) with stirring. The reaction temperature for preparing the compound (C) is preferably 40°C to 60°C.

The hydrocarbon solvent is a solvent that does not deactivate the organic alkali metal compound (alkali metal catalyst), and suitable examples of the hydrocarbon solvent include aliphatic hydrocarbons, aromatic hydrocarbons, and alicyclic hydrocarbons. Specific examples thereof include those with 2 to 12 carbon atoms such as propane, n-butane, iso-butane, n-pentane, iso-pentane, n-hexane, cyclohexane, propene, 1-butene, iso-butene, trans-2-butene, cis-2-butene, 1-pentene, 2-pentene, 1-hexene, 2-hexene, benzene, toluene, xylene, and ethylbenzene. Any of these solvents may be used alone, or two or more of these may be used in admixture.

Examples of the conjugated diene monomer used in the present invention include 1,3-butadiene, isoprene, 1,3-pentadiene (piperylene), 2,3-dimethyl-1,3-butadiene, and 1,3-hexadiene. Considering the properties of the resulting polymer and the availability for industrial purposes, 1,3-butadiene and isoprene are preferred among these.

Examples of the aromatic vinyl monomer used in the present invention include styrene, $\alpha$-methylstyrene, vinyltoluene, vinylnaphthalene, divinylbenzene, trivinylbenzene, and divinylnaphthalene. Considering the properties of the resulting polymer and the availability for industrial purposes, styrene is preferred among these.

As the monomer(s), the conjugated diene monomer may be used alone, or alternatively, the conjugated diene monomer and the aromatic vinyl monomer may be used in combination. When the conjugated diene monomer and the

aromatic vinyl monomer are used in combination, the ratio of these monomers (conjugated diene monomer/aromatic vinyl monomer) is preferably 50/50 to 90/10, and more preferably 55/45 to 85/15 on a mass basis. If the ratio is less than 50/50, the polymer rubber may be insoluble in a hydrocarbon solvent. In such a case, uniform polymerization may be impossible. Meanwhile, if the ratio is more than 90/10, the strength of the polymer rubber may be lowered.

The modified diene polymer is preferably a copolymer obtained by copolymerizing the conjugated diene monomer and the aromatic vinyl monomer, and particularly preferably a copolymer obtained by copolymerizing 1,3-butadiene and styrene (modified styrene-butadiene rubber). The use of such a modified copolymer improves the fuel economy, wet grip performance and abrasion resistance. Moreover, its combination use with silica and the compound represented by the formula (I) favorably improves the fuel economy, wet grip performance, and abrasion resistance while maintaining good processability.

The method for preparing the compound (A) is not particularly limited, provided that the compound (C) is used as a polymerization initiator. Conventionally known methods may be employed. Specifically, in an organic solvent which is inert to the reaction, such as a hydrocarbon solvent, the conjugated diene monomer, or the conjugated diene monomer and the aromatic vinyl monomer is/are polymerized using the compound (C) as a polymerization initiator, optionally in the presence of a randomizer. Then, the target active conjugated diene polymer with two ends terminated with an alkali metal is prepared.

As the hydrocarbon solvent, those used for the preparation of the compound (C) can be suitably used.

The randomizer means a compound having a function of controlling the microstructure of the conjugated diene portion in a polymer, for example, increase of 1,2-polymerization of butadiene or increase of 3,4-polymerization of isoprene, or a function of controlling the compositional distribution of monomer units in a polymer, for example, randomization of butadiene unit and styrene unit in a butadiene-styrene copolymer.

As the randomizer, compounds of various types may be used. Considering the availability for industrial purposes, ether compounds and tertiary amine compounds are preferred among these. Examples of the ether compounds include cyclic ethers such as tetrahydrofuran, tetrahydropyran, and 1,4-dioxane; aliphatic monoethers such as diethyl ether and dibutyl ether; aliphatic polyethers such as ethylene glycol dimethyl ether, ethylene glycol diethyl ether, ethylene glycol dibutyl ether, diethylene glycol diethyl ether, and diethylene glycol dibutyl ether; and aromatic ethers such as diphenyl ether and anisole. Examples of the tertiary amine compounds include triethylamine, tripropylamine, and tributylamine, as well as N,N,N',N'-tetramethylethylenediamine, N,N-diethylaniline, pyridine, and quinoline.

The compound (B) is a modifying agent having a functional group. The compound (B) is preferably a compound having a functional group that contains at least one atom selected from the group consisting of nitrogen, oxygen, and silicon.

Examples of the functional group include an amino group, amide group, alkoxysilyl group, isocyanate group, imino group, imidazole group, urea group, ether group (in particular, epoxy group), carbonyl group, carboxyl group, hydroxyl group, nitrile group, pyridyl group, and diglycidylamino group. These functional groups may be substituted. Among these, an amino group, alkoxysilyl group, ether group (in particular, epoxy group), carbonyl group, hydroxyl group, carboxyl group, and diglycidylamino group are preferred because they are highly reactive with silica.

The compound (B) is preferably a compound represented by the following formula (3). It is preferable that the compound (B) is a single compound (that is, the same modifying agent is introduced into both ends of the compound (A)). When the compound (B) is a single compound, the functional groups introduced into both ends of the compound (A) are the same. In other words, the polymer has uniform ends, and therefore the reactivity of the polymer with silica is stable.

The compound represented by the following formula (3) is a polyfunctional compound having two or more epoxy groups. These epoxy groups react with the active ends of the active conjugated diene polymer (A). As a result of the reaction, hydroxyl groups can be introduced into the polymer chain. Moreover, since the polyfunctional compound has two or more epoxy groups in each molecule, one molecule of the polyfunctional compound will react with active ends of multiple molecules of the active conjugated diene polymer (A). In this case, two or more polymer chains can be coupled. Thus a modified diene polymer should be obtained which has even three or more sites (e.g. ends) modified with the polyfunctional compound. Therefore, the balance of the fuel economy, wet grip performance and abrasion resistance can be improved by an increase in the number of modified sites (e.g. modified ends) of the modified diene polymer.

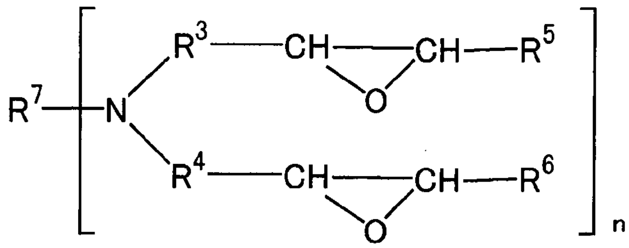

(3)

In the formula (3), $R^3$ and $R^4$ are the same as or different from each other and each represent a $C_{1-10}$ hydrocarbon group, and the hydrocarbon group may have at least one selected from the group consisting of an ether group and a tertiary amine group; $R^5$ and $R^6$ are the same as or different from each other and each represent a hydrogen atom or a $C_{1-20}$ hydrocarbon group, and the hydrocarbon group may have at least one selected from the group consisting of an ether group and a tertiary amine group; $R^7$ represents a $C_{1-20}$ hydrocarbon group, and the hydrocarbon group may have at least one selected from the group consisting of an ether group, a tertiary amine group, an epoxy group, a carbonyl group, and a halogen group; and n is an integer of 1 to 6.

$R^3$ and $R^4$ each are preferably a $C_{1-10}$ (preferably $C_{1-3}$) alkylene group. $R^5$ and $R^6$ each are preferably a hydrogen atom. Examples of $R^7$ include $C_{3-20}$ hydrocarbon groups (preferably $C_{6-10}$, and more preferably $C_8$ hydrocarbon groups), and preferred examples thereof include cycloalkyl groups, cycloalkylene groups and cycloalkanetriyl groups such as those represented by the following formulae. Cycloalkylene groups are more preferred.

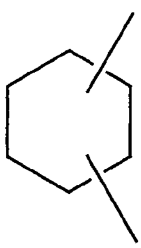 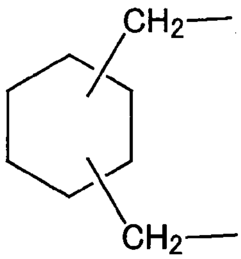 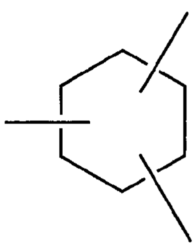 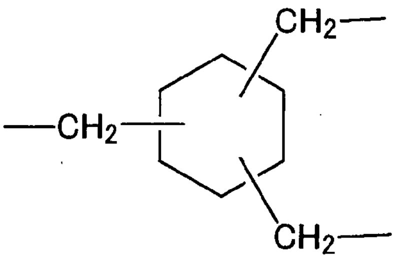

Preferably, n is 2 or 3. Suitable examples of the compound represented by the formula (3) include tetraglycidyl metaxylenediamine, tetraglycidyl aminodiphenylmethane, tetraglycidyl-p-phenylenediamine, diglycidyl aminomethylcyclohexane, and tetraglycidyl-1,3-bisaminomethylcyclohexane.

In the present invention, the diene polymer (modified diene polymer) can be produced by reacting the compounds (A) and (B) in an organic solvent inert to the reaction, such as a hydrocarbon solvent.

As the hydrocarbon solvent, those used for the preparation of the compound (C) can be suitably used.

The amount of the modifying agent (B) having a functional group is preferably 0.1 to 10 mol, and more preferably 0.5 to 2 mol, per mol of the organic alkali metal compound. Use of less than 0.1 mol of the modifying agent (B) may result in a small effect in improving the fuel economy. Meanwhile, use of more than 10 mol of the modifying agent (B) may leave an unreacted portion thereof in the polymerization solvent and therefore is not preferred for economical reasons because, for example, in the case of recycling of the solvent, it is necessary to perform an operation for removing the remaining portion from the solvent.

Since the reaction between the compounds (A) and (B) rapidly proceeds, the reaction temperature and the reaction time can be each selected from a wide range. Typically, the reaction temperature is from room temperature (25°C) to 80°C and the reaction time is from few seconds to several hours. Any method may be employed for the reaction as long as the compounds (A) and (B) are brought into contact. In one non-limiting suitable method for the reaction, for example, the diene polymer is formed by polymerization using the compound (C), and a predetermined amount of the compound (B) is then added to the polymer solution.

In terms of kneading processability, a coupling agent represented by the general formula $R_aMX_b$ may be added before or after the reaction between the compounds (A) and (B) (in the formula, R represents an alkyl group, an alkenyl group, a cycloalkenyl group or an aromatic hydrocarbon group; M represents a silicon or tin atom; X represents a halogen atom; "a" represents an integer of 0 to 2; and "b" represents an integer of 2 to 4). The amount of the coupling agent is preferably 0.03 to 0.4 mol, and more preferably 0.05 to 0.3 mol, per mol of the used organic alkali metal compound (alkali metal catalyst). Use of less than 0.03 mol of the coupling agent may result in a small effect in improving the processability. Meanwhile, use of more than 0.4 mol of the coupling agent may reduce the number of alkali metal ends that can react with the modifying agent having a functional group, resulting in less improvement in fuel economy.

After completion of the reaction, the modified diene polymer can be coagulated by a usual coagulation technique

used in the production of rubber by solution polymerization, such as addition of a coagulant or steam coagulation, and then separated from the reaction solvent. The coagulation temperature is not limited at all.

The coagulum separated from the reaction solvent is dried, whereby the diene polymer (modified diene polymer) can be obtained. For drying the coagulum, common driers used in the production of synthetic rubber, such as band driers and extrusion driers, may be used. The drying temperature is not limited at all.

The Mooney viscosity ($ML_{1+4}$) (100°C) of the diene polymer is preferably 10 to 200, and more preferably 20 to 150. The upper limit thereof is still more preferably not more than 100, and particularly preferably not more than 75. If the Mooney viscosity is less than 10, the mechanical properties (e.g. tensile strength) of the vulcanizate may be lowered. If the viscosity is more than 200, the diene polymer, when used together with other rubbers, may have poor compatibility, resulting in a decrease in processability, and the mechanical properties of the resulting rubber composition after vulcanization may be lowered. Here, the Mooney viscosity can be determined by the method described in Examples.

The vinyl content of the conjugated diene portion in the diene polymer is not particularly limited and is preferably 10 to 70 mol%, and more preferably 15 to 60 mol%. The lower limit thereof is still more preferably not less than 35 mol%, particularly preferably not less than 40 mol%, and most preferably not less than 50 mol%. If the vinyl content is less than 10 mol%, the glass transition temperature of the polymer may be lower, so that when the polymer is used for tires, the grip performance (wet grip performance) may be poor. Meanwhile, if the vinyl content is more than 70 mol%, the glass transition temperature of the polymer may be increased, resulting in poor impact resilience.

The vinyl content (1,2-butadiene unit content) can be determined by infrared absorption spectrometry.

The amount of the diene polymer in 100% by mass of the rubber component is preferably not less than 5% by mass, more preferably not less than 10% by mass, still more preferably not less than 40% by mass, and particularly preferably not less than 60% by mass. If the amount is less than 5% by mass, the fuel economy, wet grip performance, and abrasion resistance may not be at sufficient levels. The amount of the diene polymer may be 100% by mass, and is preferably not more than 90% by mass.

The rubber component of the rubber composition of the present invention may contain other rubbers together with the diene polymer. Examples of usable rubbers other than the diene polymer include natural rubber (NR), butadiene rubber (BR), styrene-butadiene rubber (SBR), styreneisoprene-butadiene rubber (SIBR), ethylene-propylene-diene rubber (EPDM), chloroprene rubber (CR), and acrylonitrile-butadiene rubber (NBR). Any of these rubbers may be used alone, or two or more of these may be used in combination. Among these, NR or BR is preferred because they increase the rubber strength, and enhance the abrasion resistance and crack growth resistance.

The NR is not particularly limited, and examples thereof include those commonly used in the tire industry, such as SIR20, RSS#3, and TSR20.

When the rubber composition of the present invention contains NR, the amount of NR in 100% by mass of the rubber component is preferably not less than 5% by mass, and more preferably not less than 10% by mass. If the amount is less than 5% by mass, the rubber strength may be insufficient so that the abrasion resistance may be lowered. Moreover, the processability and fuel economy may also be lowered. The amount of NR is preferably not more than 40% by mass, and more preferably not more than 30% by mass. If the amount is more than 40% by mass, the grip performance (wet grip performance) may be lowered.

The BR is not particularly limited and examples thereof include BR with a high cis content, such as BR1220 and BR1250H (ZEON Corporation), and BR130B and BR150B (Ube Industries, Ltd.); and syndiotactic polybutadiene crystal-containing BR such as VCR412 and VCR617 (Ube Industries, Ltd.). BR with a cis content of not less than 95% by mass is preferred among these because its low glass transition temperature (Tg) realizes favorable abrasion resistance.

When the rubber composition of the present invention contains BR, the amount of BR in 100% by mass of the rubber component is preferably not less than 5% by mass, and more preferably not less than 10% by mass. If the amount is less than 5% by mass, the crack growth resistance, abrasion resistance, processability, and fuel economy may be lowered. The amount of BR is preferably not more than 40% by mass, and more preferably not more than 30% by mass. If the amount is more than 40% by mass, the grip performance (wet grip performance) may be lowered.

A compound represented by the following formula (I) is used in the present invention. Use of the compound represented by the formula (I) together with the diene polymer and silica favorably improves the fuel economy, wet grip performance, and abrasion resistance while maintaining good processability of the rubber composition.

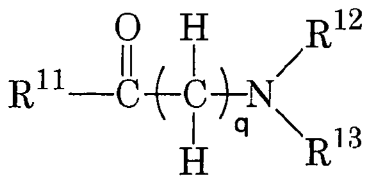

(I)

In the formula (I), $R^{11}$ represents a hydrogen atom, a branched or unbranched $C_{1-30}$ alkyl group, a branched or unbranched $C_{2-30}$ alkenyl group, a branched or unbranched $C_{630}$ aryl group, or a hydroxyl group (-OH); $R^{12}$ and $R^{13}$ are the same as or different from each other and each represent a hydrogen atom, a branched or unbranched $C_{1-30}$ alkyl group, a branched or unbranched $C_{2-30}$ alkenyl group, a branched or unbranched $C_{2-30}$ alkynyl group, a branched or unbranched $C_{630}$ aryl group, or a group represented by the following formula (II), wherein a hydrogen atom in the alkyl, alkenyl, alkynyl, or aryl group may be substituted with a hydroxyl (-OH) or carboxyl group (-COOH); a pair of $R^{11}$ and $R^{12}$, $R^{11}$ and $R^{13}$, or $R^{12}$ and $R^{13}$ may together form a ring structure; and q represents an integer of 0 to 8.

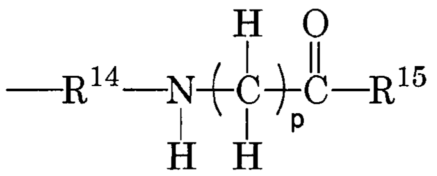

(II)

In the formula (II), $R^{14}$ represents a branched or unbranched $C_{1-30}$ alkylene group; $R^{15}$ represents a hydrogen atom, a branched or unbranched $C_{1-30}$ alkyl group, a branched or unbranched $C_{2-30}$ alkenyl group, a branched or unbranched $C_{6-30}$ aryl group, or a hydroxyl group (-OH); and p represents an integer of 0 to 10.

Examples of branched or unbranched $C_{1-30}$ (preferably $C_{3-25}$, more preferably $C_{10-20}$, and still more preferably $C_{1520}$) alkyl groups for $R^{11}$ include: a methyl group, ethyl group, n-propyl group, isopropyl group, n-butyl group, iso-butyl group, sec-butyl group, tert-butyl group, pentyl group, hexyl group, heptyl group, 2-ethylhexyl group, octyl group, nonyl group, decyl group, undecyl group, dodecyl group, tridecyl group, tetradecyl group, pentadecyl group, and octadecyl group.

Examples of branched or unbranched $C_{2-30}$ (preferably $C_{3-25}$, more preferably $C_{10-20}$, and still more preferably $C_{1520}$) alkenyl groups for $R^{11}$ include: a vinyl group, 1-propenyl group, 2-propenyl group, 1-butenyl group, 2-butenyl group, 1-pentenyl group, 2-pentenyl group, 1-hexenyl group, 2-hexenyl group, 1-octenyl group, decenyl group, undecenyl group, dodecenyl group, tridecenyl group, tetradecenyl group, pentadecenyl group, and octadecenyl group.

Examples of branched or unbranched $C_{6-30}$ (preferably $C_{6-10}$) aryl groups for $R^{11}$ include a phenyl group, tolyl group, xylyl group, naphthyl group, and biphenyl group.

$R^{11}$ is preferably a hydrogen atom, a branched or unbranched $C_{1-30}$ alkyl group, or a hydroxyl group (-OH), and more preferably the alkyl group among these.

Examples of branched or unbranched $C_{1-30}$ (preferably $C_{1-25}$, more preferably $C_{1-20}$, still more preferably $C_{1-10}$, and particularly preferably $C_{1-5}$) alkyl groups for $R^{12}$ and $R^{13}$ include those listed above for the branched or unbranched $C_{1-30}$ alkyl groups for $R^{11}$.

Examples of branched or unbranched $C_{2-30}$ (preferably $C_{2-25}$, more preferably $C_{2-20}$, still more preferably $C_{2-10}$, and particularly preferably $C_{2-5}$) alkenyl groups for $R^{12}$ and $R^{13}$ include those listed above for the branched or unbranched $C_{2-30}$ alkenyl groups for $R^{11}$.

Examples of branched or unbranched $C_{2-30}$ (preferably $C_{2-25}$, more preferably $C_{2-20}$, still more preferably $C_{2-10}$, and particularly preferably $C_{2-5}$) alkynyl groups for $R^{12}$ and $R^{13}$ include an ethynyl group, propynyl group, butynyl group, pentynyl group, hexynyl group, heptynyl group, octynyl group, nonynyl group, decynyl group, undecynyl group, and dodecynyl group.

Examples of branched or unbranched $C_{6-30}$ (preferably $C_{6-10}$) aryl groups for $R^{12}$ and $R^{13}$ include those listed above for the branched or unbranched $C_{6-30}$ aryl groups for $R^{11}$.

$R^{12}$ and $R^{13}$ are each preferably a hydrogen atom, a branched or unbranched $C_{1-30}$ alkyl group, a branched or unbranched $C_{1-30}$ alkyl group substituted with a hydroxyl or carboxyl group, a branched or unbranched $C_{6-30}$ aryl group substituted with a hydroxyl or carboxyl group, or a group represented by the formula (II). Further, $R^{12}$ and $R^{13}$ are each more preferably the alkyl group or the alkyl group substituted with a hydroxyl or carboxyl group. Furthermore, $R^{12}$ and $R^{13}$ are still more preferably a combination of the alkyl group and the alkyl group substituted with a hydroxyl or carboxyl group.

The symbol "q" represents an integer of 0 to 8. The q is preferably an integer of 0 to 3, and more preferably 0 because, in such a case, the processability, fuel economy, abrasion resistance, and wet grip performance can be more favorably improved in a balanced manner.

Examples of branched or unbranched $C_{1-30}$ (preferably $C_{1-15}$, and more preferably $C_{1-3}$) alkylene groups for $R^{14}$ include: a methylene group, ethylene group, propylene group, butylene group, pentylene group, hexylene group, heptylene group, octylene group, nonylene group, decylene group, undecylene group, dodecylene group, tridecylene group, tetradecylene group, pentadecylene group, hexadecylene group, heptadecylene group, and octadecylene group.

Examples of branched or unbranched $C_{1-30}$ (preferably $C_{3-25}$, and more preferably $C_{10-20}$) alkyl groups for $R^{15}$ include those listed above for the branched or unbranched $C_{1-30}$ alkyl groups for $R^{11}$.

Examples of branched or unbranched $C_{2-30}$ (preferably $C_{3-25}$, and more preferably $C_{10-20}$) alkenyl groups for $R^{15}$ include those listed above for the branched or unbranched $C_{2-30}$ alkenyl groups for $R^{11}$.

Examples of branched or unbranched $C_{6-30}$ (preferably $C_{6-10}$) aryl groups for $R^{15}$ include those listed above for the branched or unbranched $C_{6-30}$ aryl groups for $R^{11}$.

$R^{15}$ is preferably a branched or unbranched $C_{1-30}$ alkyl group.

The symbol "p" represents an integer of 0 to 10. The p is preferably an integer of 0 to 3, and more preferably 0 because, in such a case, the processability, fuel economy, abrasion resistance, and wet grip performance can be more favorably improved in a balanced manner.

Examples of the compound represented by the formula (I) include N,N-dimethylformamide, octadecaneamide, N-(4-hydroxyphenyl)octadecaneamide, ε-caprolactam, sarcosine, N-lauroylsarcosine, N-octadecylsarcosine, N,N'-ethylenebisoctadecaneamide, and N-(1-oxooctadecyl)sarcosine. Any of these may be used alone, or two or more of these may be used in combination.

The amount of the compound represented by the formula (I) is preferably not less than 0.1 parts by mass, more preferably not less than 0.5 parts by mass, and still more preferably not less than 1 part by mass, per 100 parts by mass of silica. If the amount is less than 0.1 parts by mass, the effects of the compound represented by the formula (I) may not be sufficiently exerted. The amount of the compound represented by the formula (I) is preferably not more than 20 parts by mass, more preferably not more than 15 parts by mass, still more preferably not more than 10 parts by mass, and particularly preferably not more than 8 parts by mass, per 100 parts by mass of silica. If the amount is more than 20 parts by mass, the hardness of the rubber composition after vulcanization may be lowered, leading to deterioration of the handling stability, wet grip performance, and abrasion resistance.

In the present invention, an amino acid derivative is preferably used in addition to the compound represented by the formula (I). In such a case, the dispersibility of silica is more favorably enhanced. As a result, the fuel economy, wet grip performance, and abrasion resistance are more favorably improved while good processability is maintained.

In the case of using an amino acid derivative in addition to the compound represented by the formula (I), for example, HT 254 supplied by Schill+Seilacher GmbH may be used, which is a commercial mixture of the compound represented by the formula (I) and an amino acid derivative.

The total amount of the compound represented by the formula (I) and the amino acid derivative is preferably not less than 0.2 parts by mass, and more preferably not less than 1 part by mass, per 100 parts by mass of silica. If the total amount is less than 0.2 parts by mass, the effects of the compound represented by the formula (I) may not be sufficiently exerted. The total amount is preferably not more than 25 parts by mass, more preferably not more than 15 parts by mass, and still more preferably not more than 10 parts by mass, per 100 parts by mass of silica. If the total amount is more than 25 parts by mass, the hardness of the rubber composition after vulcanization may be lowered, leading to deterioration of the handling stability, wet grip performance, and abrasion resistance.

In the present invention, silica is used. Use of silica together with the diene polymer and the compound represented by the formula (I) favorably improves the fuel economy, wet grip performance, and abrasion resistance while maintaining good processability. The silica is not particularly limited and examples thereof include dry silica (silicic anhydride) and wet silica (hydrous silicic acid). Wet silica is preferred because it has more silanol groups.

The nitrogen adsorption specific surface area ($N_2SA$) of silica is preferably not less than 40 $m^2/g$, more preferably not less than 50 $m^2/g$, still more preferably not less than 100 $m^2/g$, and particularly preferably not less than 150 $m^2/g$. If the $N_2SA$ is less than 40 $m^2/g$, the tensile strength tends to be lowered. The $N_2SA$ of silica is preferably not more than 250 $m^2/g$, more preferably not more than 220 $m^2/g$, and still more preferably not more than 200 $m^2/g$. If the $N_2SA$ is more than 250 $m^2/g$, the fuel economy and processability tend to be lowered.

The nitrogen adsorption specific surface area of silica is determined by the BET method in accordance with ASTM D3037-81.

The amount of silica is preferably not less than 10 parts by mass, more preferably not less than 20 parts by mass, and still more preferably not less than 30 parts by mass, per 100 parts by mass of the rubber component. If the amount is less than 10 parts by mass, the effects of silica tend not to be sufficiently exerted. The amount of silica is preferably not more than 150 parts by mass, more preferably not more than 120 parts by mass, and still more preferably not more than 100 parts by mass, per 100 parts by mass of the rubber component. If the amount is more than 150 parts by mass, the silica may not be easily dispersed in the rubber component, and thus the processability tends to be deteriorated.

In the rubber composition of the present invention, silica is preferably used together with a silane coupling agent. Examples of the silane coupling agent include sulfide-type, mercapto-type, vinyl-type, amino-type, glycidoxy-type, nitro-type, and chloro-type silane coupling agents. Sulfide-type silane coupling agents are preferred among these because the effects of the present invention are more successfully exerted.

As the sulfide-type silane coupling agents, bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide are preferred, and bis(3-triethoxysilylpropyl)disulfide is more preferred, because the effects of the present invention are more successfully exerted.

The amount of the silane coupling agent is preferably not less than 1 part by mass, and more preferably not less than 3 parts by mass, per 100 parts by mass of silica. If the amount is less than 1 part by mass, the fuel economy, abrasion resistance, and wet grip performance tend not to be sufficiently improved. The amount of the silane coupling agent is preferably not more than 20 parts by mass, and more preferably not more than 12 parts by mass, per 100 parts by mass of silica. If the amount is more than 20 parts by mass, its effects tend not to be worth the cost increase.

The rubber composition of the present invention preferably contains carbon black. Carbon black provides good reinforcement, so that the abrasion resistance can be further improved.

The carbon black is not particularly limited, and may be GPF, HAF, ISAF, SAF, or the like, for example.

The nitrogen adsorption specific surface area ($N_2SA$) of carbon black is preferably not less than 30 $m^2/g$, more preferably not less than 70 $m^2/g$, and still more preferably not less than 100 $m^2/g$. If the $N_2SA$ is less than 30 $m^2/g$, sufficient reinforcement tends not to be provided. The $N_2SA$ of carbon black is preferably not more than 250 $m^2/g$, more preferably not more than 150 $m^2/g$, and still more preferably not more than 125 $m^2/g$. If the $N_2SA$ is more than 250 $m^2/g$, the viscosity of the rubber composition before vulcanization tends to be remarkably high, thereby resulting in a decrease in processability; also, the fuel economy tends to deteriorate.

The nitrogen adsorption specific surface area of carbon black is determined in accordance with JIS K6217-2: 2001.

The dibutyl phthalate (DBP) oil absorption of carbon black is preferably not less than 70 ml/100 g, and more preferably not less than 90 ml/100 g. The DBP oil absorption of carbon black is preferably not more than 160 ml/100 g, and more preferably not more than 117 ml/100 g. A DBP oil absorption within such a range leads to balanced improvement in fuel economy, wet grip performance, and abrasion resistance.

The DBP oil absorption of carbon black is determined in accordance with JIS K6217-4:2001.

In the case where the rubber composition of the present invention contains carbon black, the amount of carbon black is preferably not less than 5 parts by mass, and more preferably not less than 8 parts by mass, per 100 parts by mass of the rubber component. If the amount is less than 5 parts by mass, the effects of carbon black may not be sufficiently exerted. The amount of carbon black is preferably not more than 60 parts by mass, more preferably not more than 20 parts by mass, and still more preferably not more than 15 parts by mass, per 100 parts by mass of the rubber component. If the amount is more than 60 parts by mass, the fuel economy tends to be lowered.

In addition to the aforementioned ingredients, the rubber composition of the present invention may optionally contain compounding ingredients conventionally used in the tire industry, such as reinforcing fillers such as clay; various softeners; various antioxidants; waxes; stearic acid; zinc oxide; vulcanizing agents such as sulfur; and various vulcanization accelerators.

Examples of the vulcanization accelerators include: sulfenamide vulcanization accelerators, thiazole vulcanization accelerators, thiuram vulcanization accelerators, thiourea vulcanization accelerators, guanidine vulcanization accelerators, dithiocarbamic acid vulcanization accelerators, aldehyde-amine or aldehyde-ammonia vulcanization accelerators, imidazoline vulcanization accelerators, and xanthate vulcanization accelerators. Among these, sulfenamide vulcanization accelerators are preferred because the effects of the present invention are more successfully exerted.

Examples of the sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ). CBS is preferred among these because the effects of the present invention are more successfully exerted. Further, a combination use of CBS and N,N'-diphenylguanidine is more preferred.

Commonly known methods may be employed as the method for producing the rubber composition of the present invention. For example, the rubber composition can be produced by kneading the ingredients mentioned above with use of a rubber kneader such as an open roll mill or a Banbury mixer, and then vulcanizing the mixture.

The rubber composition of the present invention can be suitably used for various components of a tire (in particular a tread (cap tread)).

The pneumatic tire of the present invention may be produced by a usual method with use of the above-mentioned rubber composition. More specifically, before vulcanization, the rubber composition with various additives mixed as necessary is extruded and processed into the shape of a tire component (in particular, a tread (cap tread)), and then arranged and assembled with other tire components in a usual manner in a tire building machine to form an unvulcanized tire. Then, the unvulcanized tire is heated and pressed in a vulcanizer into the tire.

The pneumatic tire of the present invention is suitably used for passenger vehicles, trucks and busses, two wheel vehicles, racing vehicles, and the like. In particular, the pneumatic tire of the present invention is more suitably used for passenger vehicles.

## EXAMPLES

The present invention will be more specifically described based on examples, but the present invention is not limited to these examples.

In the following, the chemical agents used in Production Examples are listed. It is to be noted that the chemical agents are conventionally purified, if needed.

Cyclohexane: product of Tokyo Chemical Industry Co., Ltd. (purity: 99.5% or higher)
Styrene: product of Tokyo Chemical Industry Co., Ltd. (purity: 99% or higher)
1,3-Butadiene: product of Tokyo Chemical Industry Co., Ltd.
N,N,N',N'-Tetramethylethylenediamine: product of Wako Pure Chemical Industries, Ltd.
n-Butyllithium: product of Wako Pure Chemical Industries, Ltd.
Hexane solution of 1,3-divinylbenzene (1.6 M): product of Tokyo Chemical Industry Co., Ltd.
Isopropanol: product of Wako Pure Chemical Industries, Ltd.
2,6-tert-Butyl-p-cresol: product of Wako Pure Chemical Industries, Ltd.
Tetraglycidyl-1,3-bisaminomethylcyclohexane: product of Wako Pure Chemical Industries, Ltd. (compound represented by the following formula (modifying agent))

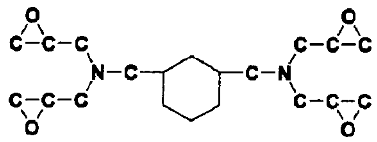

Methanol: product of Kanto Chemical Co., Inc.

Production Example 1

(Preparation of polymerization initiator)

To a 100-ml pressure-resistant vessel in which the air was sufficiently substituted with nitrogen was added 10 ml of a hexane solution of 1,3-divinylbenzene (1.6 M). To the solution, 20 ml of a hexane solution of n-butyllithium (1.6 M) was dropwise added at 0°C and the resulting mixture was stirred for one hour. Thus, a polymerization initiator solution was prepared.

Production Example 2

(Preparation of diene polymer (modified diene polymer))

To a 1000-ml pressure-resistant vessel in which the air was sufficiently substituted with nitrogen were added 600 ml of cyclohexane, 0.12 mol of styrene, 0.8 mol of 1,3-butadiene, and 0.7 mmol of N,N,N',N'-tetramethylethylenediamine. To the mixture, 1.5 ml of the polymerization initiator solution prepared in Production Example 1 was further added, and the resulting mixture was stirred at 40°C. After three hours, 1.0 mmol of tetraglycidyl-1,3-bisaminomethylcyclohexane (modifying agent) was added thereto and the resulting mixture was stirred. After one hour, 3 ml of isopropanol was added to the mixture to terminate the polymerization. After adding 1 g of 2,6-tert-butyl-p-cresol to the reaction solution, the solution was subjected to reprecipitation treatment with methanol, and the precipitate was heated and dried to give a diene polymer (modified diene polymer having two or more modified sites (e.g. modified ends)).
The prepared diene polymer was evaluated as follows.

(Mooney viscosity)

The Mooney viscosity ($ML_{1+4}$/100°C) of the diene polymer was determined in accordance with JIS K 6300-1 "Rubber, unvulcanized - Physical property - Part 1: Determination of Mooney viscosity and pre-vulcanization characteristics with Mooney viscometer". That is, a Mooney viscosity tester was preheated for one minute up to 100°C and a small rotor was rotated under this temperature condition. After four-minute rotation, the Mooney viscosity ($ML_{1+4}$/100°C) was determined. Here, the obtained values were rounded to the nearest whole number. This resulted in a Mooney viscosity of 60 for the diene polymer.

(Vinyl content)

The vinyl content of the diene polymer was determined by infrared absorption spectrometry. This resulted in a vinyl content of 57 mol% for the diene polymer.

In the following, the chemical agents used in Examples and Comparative Examples are listed.

Diene polymer: diene polymer prepared in Production Example 2
SBR: E15 (S-SBR coupled with an epoxy group-containing compound (tetraglycidyl-1,3-bisaminomethylcyclohexane), styrene unit content: 23% by mass, vinyl unit content: 64% by mass, end group: OH (one end-modified SBR), Asahi Kasei Chemicals Corp.)
BR: Nipol BR1220 (cis content: 97% by mass, Zeon Corp.)
NR: RSS#3
Carbon black: Diablack N220 (N220, $N_2SA$: 114 $m^2/g$, DBP oil absorption: 114 ml/100 g, Mitsubishi Chemical Corp.)
Silica: Ultrasil VN3 ($N_2SA$: 175 $m^2/g$, Degussa)
Silane coupling agent: Si75 (bis(3-triethoxysilylpropyl)disulfide, Evonik Degussa)
Compound (i): N,N-dimethylformamide (compound represented by the formula (I), Tokyo Chemical Industry Co., Ltd.)
Compound (ii): N,N'-ethylenebisoctadecaneamide (compound represented by the formula (I), Tokyo Chemical Industry Co., Ltd.)
Compound (iii): N-octadecylsarcosine (compound represented by the formula (I), Tokyo Chemical Industry Co., Ltd.)
Compound (iv): N-lauroylsarcosine (compound represented by the formula (I), Tokyo Chemical Industry Co., Ltd.)
Compound (v): HT254 (fatty acid amide-type processing aid (mixture of fatty acid amide (compound represented by the formula (I) (N-(1-oxooctadecyl)sarcosine)) and amino acid derivative, fatty acid amide content: 25% to 50% by mass), Schill+Seilacher GmbH)
Zinc oxide: Zinc oxide #1 (Mitsui Mining & Smelting Co., Ltd.)
Stearic acid: stearic acid "Tsubaki" (NOF Corp.)
Aromatic oil: Process X-140 (Japan Energy Corp.)
Antioxidant: Antigen 6C (N-(1,3-dimethylbutyl)-N'-phenyl-p-phenylenediamine, Sumitomo Chemical Co., Ltd.)
Wax: SUNNOC N (Ouchi Shinko Chemical Industrial Co., Ltd.)
Sulfur: sulfur powder (Karuizawa Iou K.K.)
Vulcanization accelerator (1): Nocceler CZ (N-cyclohexyl-2-benzothiazolylsulfenamide, Ouchi Shinko Chemical Industrial Co., Ltd)
Vulcanization accelerator (2): Nocceler D (N,N'-diphenylguanidine, Ouchi Shinko Chemical Industrial Co., Ltd)

Examples and Comparative Examples

The chemical agents in formulation amounts shown in Table 1, except the sulfur and vulcanization accelerators, were kneaded with a Banbury mixer at 165°C for four minutes to give a kneaded mixture. To the kneaded mixture were added the sulfur and vulcanization accelerators and then the resulting mixture was kneaded with an open roll mill at 80°C for four minutes to give an unvulcanized rubber composition. Then, a portion of the unvulcanized rubber composition was formed into a tread shape, assembled with other tire components, and vulcanized at 150°C for 35 minutes at 25 kgf to give a test tire (tire size: 195/65R15).

The obtained unvulcanized rubber compositions and test tires were each evaluated as follows. The results are shown in Table 1.

(Determination of Mooney viscosity)

The Mooney viscosity of the obtained unvulcanized rubber compositions was measured at 130°C by a method of determining the Mooney viscosity in conformity with JIS K6300. Based on the Mooney viscosity ($ML_{1+4}$) of Comparative Example 1 regarded as 100, the result of each formulation was expressed as an index (Mooney viscosity index) by the following equation. A larger index value corresponds to a lower Mooney viscosity, that is, higher level of processability.

$$\text{(Mooney viscosity index)} = (ML_{1+4} \text{ of Comparative Example 1})/(ML_{1+4} \text{ of each formulation}) \times 100$$

(Fuel economy)

Using a rolling resistance tester, the rolling resistance of each test tire was determined under the running conditions of: a rim of 15 x 6JJ, an internal pressure of 230 kPa, a load of 3.43 kN, and a speed of 80 km/h. The result of each tire was expressed as an index relative to a value of 100 representing the rolling resistance of Comparative

Example 1. A larger index value corresponds to higher level of fuel economy.

(Wet grip performance)

The wet grip performance was evaluated based on the braking performance determined by an Anti-Lock Brake System (ABS) evaluation test. Specifically, each set of test tires was mounted on a 1800-cc class passenger vehicle equipped with an ABS, and the vehicle was driven on an asphalt road (condition of road surface: wet, skid number: approximately 50). Then, the brake was stepped on when the speed was 100 km/h, and the distance traveled until the vehicle stopped (stopping distance) was measured. The wet grip performance index of Comparative Example 1 was regarded as 100, and the stopping distance of each formulation was expressed as a wet grip performance index by the following equation. A larger wet grip performance index value corresponds to higher level of the braking performance on a wet road, that is, higher level of wet grip performance.

(Wet grip performance index) = (Stopping distance of Comparative Example 1)/(Stopping distance of each formulation)×100

(Abrasion resistance)

Each set of test tires was mounted on a 1800-cc class passenger vehicle equipped with an ABS, and the decrease in the depth of tire grooves was measured after the vehicle had run 30000 km in a city area. Then, the running distance that decreased the depth of tire grooves by 1 mm was calculated. Based on the abrasion resistance index of Comparative Example 1 regarded as 100, the result obtained from the decrease in the depth of tire grooves of each formulation was expressed as an index by the following equation. A larger abrasion resistance index value corresponds to higher level of abrasion resistance.

(Abrasion resistance index) = (Running distance that decreased tire groove depth by 1 mm for each formulation)/(Running distance that decreased tire groove depth by 1 mm for Comparative Example 1)×100

[Table 1]

| | | Comparative Example 1 | Comparative Example 2 | Comparative Example 3 | Comparative Example 4 | Comparative Example 5 | Example 1 | Example 2 | Example 3 | Example 4 | Example 5 | Example 6 | Comparative Example 6 | Example 7 | Example 8 | Comparative Example 7 | Example 9 | Example 10 |
|---|---|---|---|---|---|---|---|---|---|---|---|---|---|---|---|---|---|---|
| Formulation (part(s) by mass) | Diene polymer | — | — | — | 100 | — | 100 | 100 | 100 | 100 | 100 | 100 | 80 | 80 | 80 | 80 | 80 | 80 |
| | SBR | 100 | 80 | 80 | — | 100 | — | — | — | — | — | — | — | — | — | — | — | — |
| | BR | — | 20 | — | — | — | — | — | — | — | — | — | 20 | 20 | 20 | — | — | — |
| | NR | — | — | 20 | — | — | — | — | — | — | — | — | — | — | — | 20 | 20 | 20 |
| | Silica | 75 | 75 | 75 | 75 | 75 | 75 | 75 | 75 | 75 | 75 | 75 | 75 | 75 | 75 | 75 | 75 | 75 |
| | Carbon Black | 10 | 10 | 10 | 10 | 10 | 10 | 10 | 10 | 10 | 10 | 10 | 10 | 10 | 10 | 10 | 10 | 10 |
| | Silane coupling agent | 6 | 6 | 6 | 6 | 6 | 6 | 6 | 6 | 6 | 6 | 6 | 6 | 6 | 6 | 6 | 6 | 6 |
| | Compound (i) | — | — | — | — | — | 2 | — | — | — | — | — | — | — | — | — | — | — |
| | Compound (ii) | — | — | — | — | — | — | 2.5 | — | — | — | — | — | — | — | — | — | — |
| | Compound (iii) | — | — | — | — | — | — | — | 2 | — | — | — | — | — | — | — | — | — |
| | Compound (iv) | — | — | — | — | — | — | — | — | 2.5 | — | — | — | — | — | — | — | — |
| | Compound (v) | — | — | — | — | 2 | — | — | — | — | 2 | 4 | — | 2 | 4 | — | 2 | 4 |
| | Zinc oxide | 3 | 3 | 3 | 3 | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 |
| | Aromatic oil | 20 | 20 | 20 | 20 | 20 | 20 | 20 | 20 | 20 | 20 | 20 | 20 | 20 | 20 | 20 | 20 | 20 |
| | Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator (1) | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Vulcanization accelerator (2) | 1 | 1 | 1 | 1 | 1 | 1 | 1 | 1 | 1 | 1 | 1 | 1 | 1 | 1 | 1 | 1 | 1 |
| Evaluation | Processability | 100 | 105 | 110 | 65 | 100 | 100 | 102 | 105 | 100 | 101 | 109 | 70 | 106 | 114 | 75 | 111 | 119 |
| | Fuel economy | 100 | 103 | 103 | 101 | 102 | 105 | 105 | 105 | 105 | 110 | 110 | 108 | 108 | 108 | 110 | 110 | 110 |
| | Wet grip performance | 100 | 93 | 95 | 110 | 108 | 113 | 113 | 115 | 117 | 120 | 123 | 103 | 113 | 116 | 105 | 115 | 118 |
| | Abrasion resistance | 100 | 105 | 102 | 105 | 105 | 105 | 105 | 105 | 105 | 105 | 105 | 110 | 110 | 110 | 108 | 108 | 108 |

Table 1 shows that in Examples in which a specific modified diene polymer, silica, and a compound represented by the formula (I) were used in combination, the fuel economy, wet grip performance, and abrasion resistance were improved while good processability was maintained.

Comparison of Comparative Examples 1, 4, and 5 and Example 5 clarified that the combination use of the above three components synergistically improves the fuel economy and wet grip performance.

## Claims

1. A tire rubber composition comprising:

a rubber component including a diene polymer;
silica; and
a compound represented by the following formula (I),
the diene polymer being a modified diene polymer obtained by reacting a compound (A) and a compound (B),
the compound (A) being an active alkali metal-terminated conjugated diene polymer obtained by polymerizing a conjugated diene monomer alone or with an aromatic vinyl monomer, in the presence of a compound (C),
the compound (B) being a modifying agent having a functional group,
the compound (C) being a chemical species obtained by reacting an organic alkali metal compound with a compound represented by the following formula (2):

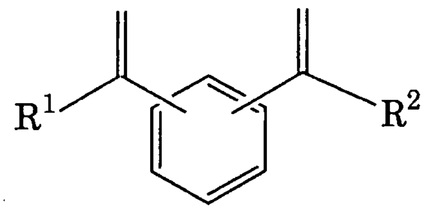

(2)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof,
the formula (I) being as follows:

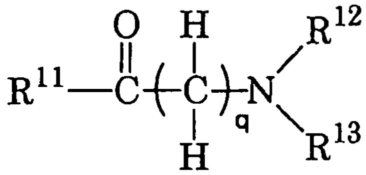

(I)

wherein $R^{11}$ represents a hydrogen atom, a branched or unbranched $C_{1-30}$ alkyl group, a branched or unbranched $C_{2-30}$ alkenyl group, a branched or unbranched $C_{6-30}$ aryl group, or a hydroxyl group; $R^{12}$ and $R^{13}$ are the same as or different from each other and each represent a hydrogen atom, a branched or unbranched $C_{1-30}$ alkyl group, a branched or unbranched $C_{2-30}$ alkenyl group, a branched or unbranched $C_{230}$ alkynyl group, a branched or unbranched $C_{6-30}$ aryl group, or a group represented by the following formula (II), wherein a hydrogen atom in the alkyl, alkenyl, alkynyl, or aryl group may be substituted with a hydroxyl or carboxyl group; a pair of $R^{11}$ and $R^{12}$, $R^{11}$ and $R^{13}$, or $R^{12}$ and $R^{13}$ may together form a ring structure; and q represents an integer of 0 to 8, and the formula (II) being as follows:

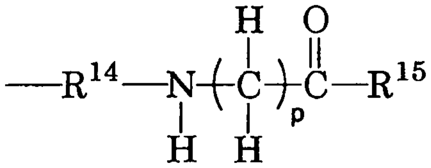

(II)

wherein $R^{14}$ represents a branched or unbranched $C_{1-30}$ alkylene group; $R^{15}$ represents a hydrogen atom, a branched or unbranched $C_{1-30}$ alkyl group, a branched or unbranched $C_{230}$ alkenyl group, a branched or unbranched $C_{6-30}$ aryl group, or a hydroxyl group; and p represents an integer of 0 to 10.

**2.** The tire rubber composition according to claim 1,
wherein the modifying agent is a compound represented by the following formula (3):

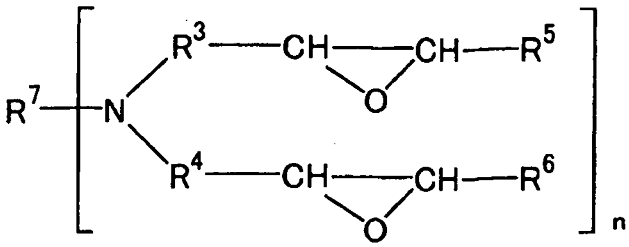

(3)

wherein $R^3$ and $R^4$ are the same as or different from each other and each represent a $C_{1-10}$ hydrocarbon group, and the hydrocarbon group may have at least one selected from the group consisting of an ether group and a tertiary amine group; $R^5$ and $R^6$ are the same as or different from each other and each represent a hydrogen atom or a $C_{1-20}$ hydrocarbon group, and the hydrocarbon group may have at least one selected from the group consisting of an ether group and a tertiary amine group; $R^7$ represents a $C_{1-20}$ hydrocarbon group, and the hydrocarbon group may have at least one selected from the group consisting of an ether group, a tertiary amine group, an epoxy group, a carbonyl group, and a halogen group; and n is an integer of 1 to 6.

**3.** The tire rubber composition according to claim 1 or 2,
wherein the same modifying agent is introduced into both ends of the active conjugated diene polymer.

**4.** The tire rubber composition according to any of claims 1 to 3,
wherein the amount of the diene polymer is not less than 5% by mass based on 100% by mass of the rubber component.

**5.** The tire rubber composition according to any of claims 1 to 4,
wherein the conjugated diene monomer is at least one of 1,3-butadiene and isoprene, and
the aromatic vinyl monomer is styrene.

**6.** The tire rubber composition according to any of claims 1 to 5,
wherein the modified diene polymer is a modified styrene-butadiene rubber obtained by polymerizing 1,3-butadiene and styrene.

**7.** The tire rubber composition according to any of claims 1 to 6,
wherein the silica has a nitrogen adsorption specific surface area of 40 to 250 $m^2/g$.

**8.** Tread made by a rubber composition according to any of claims 1 to 7.

**9.** A pneumatic tire produced using the tire rubber composition according to any of claims 1 to 8.

## Patentansprüche

**1.** Reifenkautschukzusammensetzung enthaltend:

eine Kautschukkomponente, welche ein Dienpolymer enthält,
Silica und
eine Verbindung, welche durch die nachfolgende Formel (I) wiedergegeben wird,
wobei das Dienpolymer ein modifiziertes Dienpolymer ist, welches durch Reagieren einer Verbindung (A) mit einer Verbindung (B) erhalten wird,
wobei die Verbindung (A) ein mit einem aktiven Alkalimetall terminiertes konjugiertes Dienpolymer ist, welches durch eine Polymerisation eines konjugierten Dienmonomers alleine oder mit einem aromatischen Vinylmonomer in der Gegenwart einer Verbindung (C) erhalten worden ist,
wobei die Verbindung (B) ein Modifizierungsmittel mit einer funktionellen Gruppe ist,
wobei die Verbindung (C) eine chemische Spezies ist, welche durch Reagieren einer organischen Alkalimetallverbindung mit einer durch die nachfolgende Formel (2) wiedergegebenen Verbindung erhalten worden ist:

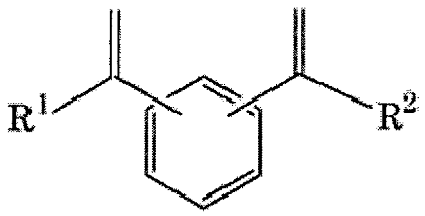
(2)

worin $R^1$ und $R^2$ gleich oder voneinander verschieden sind und unabhängig voneinander ein Wasserstoffatom, eine verzweigte oder unverzweigte Alkylgruppe, eine verzweigte oder unverzweigte Arylgruppe, eine verzweigte oder unverzweigte Alkoxygruppe, eine verzweigte oder unverzweigte Silyloxygruppe, eine verzweigte oder unverzweigte Acetalgruppe, eine Carboxylgruppe, eine Mercaptogruppe oder ein Derivat hiervon sind,
wobei die Formel (I) wie folgt ist:

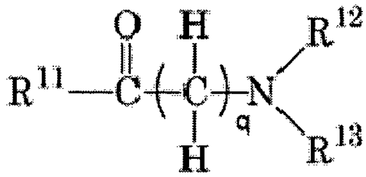
(I)

worin $R^{11}$ ein Wasserstoffatom, eine verzweigte oder unverzweigte $C_{1-30}$-Alkylgruppe, eine verzweigte oder unverzweigte $C_{2-30}$-Alkenylgruppe, eine verzweigte oder unverzweigte $C_{6-30}$-Arylgruppe oder eine Hydroxylgruppe bedeutet, $R^{12}$ und $R^{13}$ gleich oder voneinander verschieden sind und unabhängig voneinander ein Wasserstoffatom, eine verzweigte oder unverzweigte $C_{1-30}$-Alkylgruppe, eine verzweigte oder unverzweigte $C_{2-30}$-Alkenylgruppe, eine verzweigte oder unverzweigte $C_{2-30}$-Alkinylgruppe, eine verzweigte oder unverzweigte $C_{6-30}$-Arylgruppe oder eine durch die nachfolgende Formel (II) wiedergegebene Gruppe bedeuten, wobei ein Wasserstoffatom in der Alkyl-, Alkenyl-, Alkinyl- oder Arylgruppe mit einer Hydroxyl- oder Carboxylgruppe substituiert sein kann, wobei ein Paar von $R^{11}$ und $R^{12}$, von $R^{11}$ und $R^{13}$ oder von $R^{12}$ und $R^{13}$ zusammen eine Ringstruktur ausbilden kann, und q eine ganze Zahl zwischen 0 und 8 bedeutet, und wobei
die Formel (II) wie folgt ist:

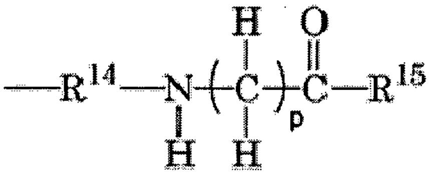
(II)

worin $R^{14}$ eine verzweigte oder unverzweigte $C_{1-30}$-Alkylengruppe bedeutet, $R^{15}$ ein Wasserstoffatom, eine verzweigte oder unverzweigte $C_{1-30}$-Alkylgruppe, eine verzweigte oder unverzweigte $C_{2-30}$-Alkenylgruppe, eine

verzweigte oder unverzweigte $C_{6-30}$-Arylgruppe oder eine Hydroxylgruppe bedeutet und p eine ganze Zahl zwischen 0 und 10 bedeutet.

**2.** Reifenkautschukzusammensetzung nach Anspruch 1,
wobei das Modifizierungsmittel eine Verbindung ist, welche durch die nachfolgende Formel (3) wiedergegeben wird:

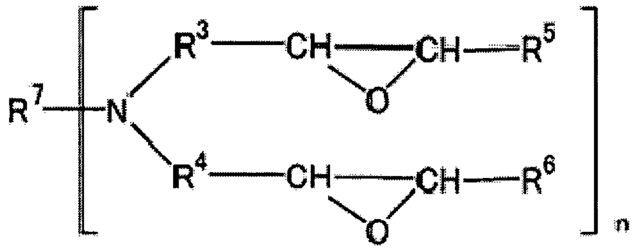

(3)

worin $R^3$ und $R^4$ gleich oder verschieden voneinander sind und jeweils eine $C_{1-10}$-Kohlenwasserstoffgruppe sind, und, wobei die Kohlenwasserstoffgruppe wenigstens eine ausgewählt aus der Gruppe bestehend aus einer Ethergruppe und einer tertiären Amingruppe aufweisen kann, $R^5$ und $R^6$ gleich oder verschieden voneinander sind und jeweils ein Wasserstoffatom oder eine $C_{1-20}$-Kohlenwasserstoffgruppe bedeuten und die Kohlenwasserstoffgruppe wenigstens eine ausgewählt aus der Gruppe bestehend aus einer Ethergruppe und einer tertiären Amingruppe aufweisen kann, $R^7$ eine $C_{1-20}$-Kohlenwasserstoffgruppe ist und die Kohlenwasserstoffgruppe wenigstens eine ausgewählt aus der Gruppe bestehend aus einer Ethergruppe, einer tertiären Amingruppe, einer Epoxygruppe, einer Carbonylgruppe und einer Halogengruppe ist, und n eine ganze Zahl zwischen 1 und 6 ist.

**3.** Reifenkautschukzusammensetzung nach Anspruch 1 oder 2,
wobei in beide Enden des aktiven konjugierten Dienpolymers dasselbe Modifizierungsmittel eingeführt ist.

**4.** Reifenkautschukzusammensetzung nach einem der Ansprüche 1 bis 3,
wobei die Menge des Dienpolymers nicht weniger als 5 Massen-% bezogen auf 100 Massen-% der Kautschukkomponente beträgt.

**5.** Reifenkautschukzusammensetzung nach einem der Ansprüche 1 bis 4,
wobei das konjugierte Dienmonomer wenigstens eines von 1,3-Butadien und Isopren ist und das aromatische Vinylmonomer Styrol ist.

**6.** Reifenkautschukzusammensetzung nach einem der Ansprüche 1 bis 5,
wobei das modifizierte Dienpolymer ein modifizierter Styrol-Butadien-Kautschuk ist, welcher durch Polymerisieren von 1,3-Butadien und Styrol erhalten worden ist.

**7.** Reifenkautschukzusammensetzung nach einem der Ansprüche 1 bis 6,
wobei das Silica eine durch Stickstoffadsorption gemessene spezifische Oberfläche von 40 bis 250 $m^2$/g aufweist.

**8.** Lauffläche hergestellt aus einer Kautschukzusammensetzung nach einem der Ansprüche 1 bis 7.

**9.** Luftreifen hergestellt unter Verwendung einer Reifenkautschukzusammensetzung nach einem der Ansprüche 1 bis 8.

## Revendications

**1.** Composition de caoutchouc de pneu comprenant :

un constituant de caoutchouc incluant un polymère de diène ;
de la silice ; et
un composé représenté par la formule (I) suivante,
le polymère de diène étant un polymère de diène modifié obtenu par réaction d'un composé (A) et d'un composé (B),

le composé (A) étant un polymère de diène conjugué à terminaison de métal alcalin actif obtenu par polymérisation d'un monomère de diène conjugué seul ou avec un monomère de vinyle aromatique, en présence d'un composé (C),
le composé (B) étant un agent de modification présentant un groupe fonctionnel,
le composé (C) étant une espèce chimique obtenue par réaction d'un composé de métal alcalin organique avec un composé représenté par la formule (2) suivante :

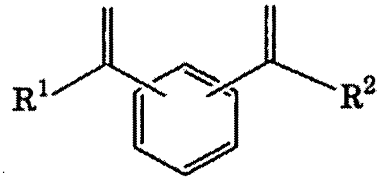
(2)

où $R^1$ et $R^2$ sont identiques ou différents l'un de l'autre et représentent chacun un atome d'hydrogène, un groupe alkyle ramifié ou non ramifié, un groupe aryle ramifié ou non ramifié, un groupe alcoxy ramifié ou non ramifié, un groupe silyloxy ramifié ou non ramifié, un groupe acétal ramifié ou non ramifié, un groupe carboxyle, un groupe mercapto, ou un dérivé de ceux-ci,
la formule (I) étant la suivante :

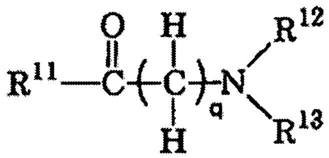
(I)

où $R^{11}$ représente un atome d'hydrogène, un groupe alkyle en $C_{1-30}$ ramifié ou non ramifié, un groupe alcényle en $C_{2-30}$ ramifié ou non ramifié, un groupe aryle en $C_{6-30}$ ramifié ou non ramifié, ou un groupe hydroxyle ; $R^{12}$ et $R^{13}$ sont identiques ou différents l'un de l'autre et représentent chacun un atome d'hydrogène, un groupe alkyle en $C_{1-30}$ ramifié ou non ramifié, un groupe alcényle en $C_{2-30}$ ramifié ou non ramifié, un groupe alcynyle en $C_{2-30}$ ramifié ou non ramifié, un groupe aryle en $C_{6\ 30}$ ramifié ou non ramifié, ou un groupe représenté par la formule (II) suivante,
où un atome d'hydrogène dans le groupe alkyle, alcényle, alcynyle ou aryle peut être substitué avec un groupe hydroxyle ou carboxyle ; une paire de $R^{11}$ et $R^{12}$, $R^{11}$ et $R^{13}$ ou $R^{12}$ et $R^{13}$ peut former ensemble une structure cyclique ; et q représente un nombre entier de 0 à 8, et
la formule (II) étant la suivante :

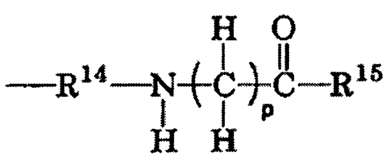
(II)

où $R^{14}$ représente un groupe alkylène en $C_{1-30}$ ramifié ou non ramifié ; $R^{15}$ représente un atome d'hydrogène, un groupe alkyle en $C_{1-30}$ ramifié ou non ramifié, un groupe alcényle en $C_{2-30}$ ramifié ou non ramifié, un groupe aryle en $C_{6-30}$ ramifié ou non ramifié, ou un groupe hydroxyle ; et p représente un nombre entier de 0 à 10.

2. Composition de caoutchouc de pneu selon la revendication 1, dans laquelle l'agent de modification est un composé représenté par la formule (3) suivante :

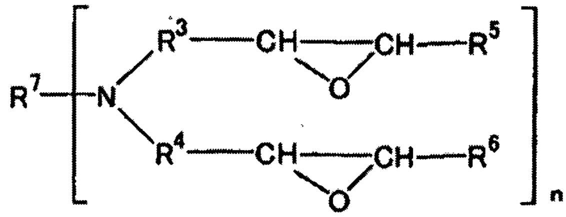

(3)

où $R^3$ et $R^4$ sont identiques ou différents l'un de l'autre et représentent chacun un groupe hydrocarboné en $C_{1-10}$, et le groupe hydrocarboné peut présenter au moins un choisi dans le groupe constitué d'un groupe éther et d'un groupe amine tertiaire ; $R^5$ et $R^6$ sont identiques ou différents l'un de l'autre et représentent chacun un atome d'hydrogène ou un groupe hydrocarboné en $C_{1-20}$, et le groupe hydrocarboné peut présenter au moins un choisi dans le groupe constitué d'un groupe éther et d'un groupe amine tertiaire ; $R^7$ représente un groupe hydrocarboné en $C_{1-20}$, et le groupe hydrocarboné peut présenter au moins un choisi dans le groupe constitué d'un groupe éther, d'un groupe amine tertiaire, d'un groupe époxy, d'un groupe carbonyle, et d'un groupe halogène ; et n est un nombre entier de 1 à 6.

**3.** Composition de caoutchouc de pneu selon la revendication 1 ou 2, dans laquelle le même agent de modification est introduit aux deux extrémités du polymère de diène conjugué actif.

**4.** Composition de caoutchouc de pneu selon l'une quelconque des revendications 1 à 3, dans laquelle la quantité du polymère de diène n'est pas inférieure à 5 % en masse rapporté à 100 % en masse du constituant de caoutchouc.

**5.** Composition de caoutchouc de pneu selon l'une quelconque des revendications 1 à 4, dans laquelle le monomère de diène conjugué est au moins un parmi le 1,3-butadiène et l'isoprène, et
le monomère de vinyle aromatique est le styrène.

**6.** Composition de caoutchouc de pneu selon l'une quelconque des revendications 1 à 5, dans laquelle le polymère de diène modifié est un caoutchouc de styrène-butadiène modifié obtenu par polymérisation de 1,3-butadiène et de styrène.

**7.** Composition de caoutchouc de pneu selon l'une quelconque des revendications 1 à 6, dans laquelle la silice présente une surface spécifique d'adsorption d'azote de 40 à 250 $m^2/g$.

**8.** Bande de roulement constituée par une composition de caoutchouc selon l'une quelconque des revendications 1 à 7.

**9.** Pneumatique produit en utilisant la composition de caoutchouc de pneu selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2098564 A1
- EP 2345696 A1
- WO 0188027 A1
- JP 2001114938 A